# DEMANDE DE BREVET EUROPEEN

(11) **EP 0 867 383 A1**
(43) Date de publication de la demande: **30.09.1998**
(21) Numéro de dépôt: 98400673.4
(22) Date de dépôt: 23.03.1998
(51) Int. Cl.: B65G 15/40, B65G 15/36

(54) **Bande transporteuse souple et convoyeur en faisant application**

(30) Priorité: 25.03.1997 FR 9703609
(71) Demandeur: S.F.B.T. - Société Française de Bandes Transporteuses, 95104 Argenteuil (FR)
(72) Inventeur: Odin, Jean-Paul, c/o S.F.B.T. Societe, 95104 Argenteuil (FR); Pelissou, Jean-Paul, c/o S.F.B.T. Societe, 95104 Argenteuil (FR)
(74) Mandataire: Fort, Jacques

(57) **Abrégé**

La bande transporteuse souple, de forme plate au repos, comprend une armature interne de renfort noyée dans des couches de matériaux élastomère. L'armature comprend une première nappe (10) en câblés longitudinaux de résistance en traction, une seconde nappe (12) en câbles transversaux de résistance transversale en traction et une couche de raidissement ayant une résistance à la compression transversale élevée. La couche de raidissement comprend plusieurs bandes étroites (14) placées dans le même plan au repos, mutuellement adjacentes et laissant subsister entre elles une zone de largeur suffisante pour autoriser le pliage de la bande transporteuse entre deux rangées de rouleaux d'un convoyeur.

## Description

La présente invention concerne les bandes transporteuses souples de forme plate au repos, comprenant une armature interne de renfort noyée dans des couches de matériau élastomère, dont l'armature comprend une première nappe en câblés longitudinaux de résistance longitudinale de la bande en traction, une seconde nappe en câblés transversaux de résistance transversale en traction et une couche de raidissement ayant une résistance à la compression transversale élevée, comparée à la seconde nappe.

Le document EP-A-0 047 739 décrit une bande de ce type, dont la couche de raidissement est étroite et logée uniquement dans une partie centrale de la bande ; cette couche a une largeur sensiblement égale à la longueur individuelle des rouleaux appartenant à une rangée de supportage de la partie centrale de la bande. Cette constitution des bandes permet de les utiliser pour transporter des matériaux en vrac dans des convoyeurs ayant plusieurs rangées parallèles de rouleaux donnant à la bande une forme en auge à fond plat.

Le document DE-A-41 13 626 décrit une bande transporteuse comportant une nappe en fils longitudinaux de résistance logitudinale de la bande en traction et une couche supplémentaire constituée de plusieurs bandes ayant une précontrainte longitudinale. Ces bandes n'ont pas de résistance à la compression transversale appréciable.

La présente invention vise notamment à fournir une bande utilisable dans des convoyeurs à bande prévus pour donner à la bande, au moins dans la portion où elle transporte des matériaux, une configuration presque fermée, limitant le risque d'échappement de matériaux. Lors de l'utilisation de bandes connues dans de tels convoyeurs, la bande risque de se tordre sur elle-même à l'intérieur de l'ossature de support et de guidage. Une telle torsion ou pivotement de la bande peut provoquer un déversement intempestif du produit transporté.

L'invention vise notamment à écarter ce risque. Dans ce but, elle propose une bande transporteuse conforme à la revendication 1.

Grâce à cette disposition, la bande transporteuse prend une forme à facettes lorsqu'elle est emprisonnée entre les rangées de rouleaux appartenant à l'ossature d'un convoyeur et elle ne peut tourner autour de son axe.

Avantageusement, il y a au moins autant de bandes étroites que de rangées de rouleaux sur lesquels la bande transporteuse repose sur son trajet de transport, la bande transporteuse étant au contraire généralement démunie de bandes étroites face aux rangées de rouleaux qui n'assurent qu'une fonction de fermeture de la section droite.

L'invention propose également un convoyeur suivant la revendication 5. D'autres caractéristiques encore sont définies par les sous-revendications.

Les caractéristiques ci-dessus ainsi que d'autres apparaîtront mieux à la lecture de la description qui suit de modes particuliers de réalisation de l'invention, donnés à titres d'exemples non limitatifs.

La description se réfère aux dessins qui l'accompagnent, dans lesquels :
- la figure 1 est une vue en coupe transversale d'une bande selon un mode particulier de réalisation de l'invention, telle qu'elle se trouve au repos, sans contrainte ;
- la figure 2 est une vue en perspective d'un fragment de la bande transporteuse de la figure 1, avec des arrachements étagés ;
- la figure 3 est une vue en coupe transversale montrant la forme prise par la bande des figures 1 et 2 dans un convoyeur particulier ;
- les figures 4 à 7 montrent d'autres répartitions possibles de bandes étroites dans des bandes transporteuses, destinées respectivement à des convoyeurs imposant à la bande une section carrée triangulaire, pentagonale et hexagonale ;
- la figure 8, similaire à la figure 3, montre une bande munie de palettes ;
- la figure 9 est une vue en coupe de la bande montrée en figure 8, à l'état de repos ;
- la figure 10, similaire à la figure 3, montre une bande transporteuse munie de palettes et destinée à être utilisée dans un convoyeur lui imposant une section carrée dans la zone de transport de matériau.

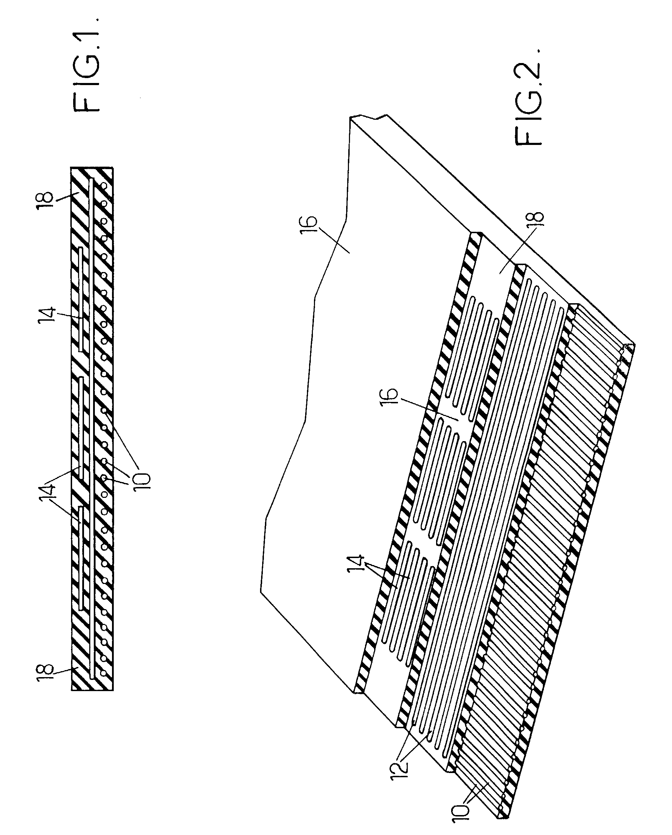

La bande transporteuse montrée en figures 1 et 2 est fabriquée à plat et au repos elle se présente à plat. Elle a une épaisseur constante d'un bord à l'autre. Elle comprend une carcasse ou armature interne de renfort mécanique comprenant une nappe 10 de résistance longitudinale à la traction occupant presque toute la largeur de la bande, une nappe 12 de résistance à la déchirure longitudinale occupant également la quasi totalité de la largeur de la bande et enfin trois bandes étroites 14 occupant chacune une fraction de la largeur de la bande, destinées à résister à la compression transversale et également à empêcher la bande de prendre une section arrondie.

Les nappes 10 et 12 et les bandes étroites sont noyées dans une masse d'élastomère 16, réalisée de façon que l'épaisseur de la nappe soit sensiblement constante d'un bord à l'autre débordant latéralement des nappes. Cet élastomère peut notamment être en caoutchouc vulcanisé.

La nappe 10, qui est la plus proche des rouleaux de support de la bande dans un convoyeur, est constituée de câblés longitudinaux. Ces câblés sont parallèles dans le cas d'une bande transporteuse à armature métallique. Ils peuvent également constituer plusieurs plis de fibres textiles, le terme "textile" devant être interprété dans un sens large et comme couvrant aussi bien les fibres naturelles que les fibres synthétiques à haute résistance. Cette nappe 10 est réalisée de façon à assurer la résistance à la traction requise pour la bande transporteuse tout en autorisant le passage de la bande à l'état plat sur des rouleaux de renvoi. Ces câblés, lorsqu'ils sont métalliques, peuvent être constitués chacun de plusieurs torons torsadés comportant chacun 7 ou 19 fils élémentaires. Les sens d'enroulement dans les torons et des torons entre eux pour constituer chacun des câblés sont choisis de façon à ne pas provoquer une tendance à l'enroulement de la bande sur elle-même.

La nappe 12 est destinée à donner à la bande transporteuse la résistance requise aux efforts de traction transversaux, tout en autorisant la formation de coudes suivant des lignes longitudinales de la bande. Elle est constituée de câblés orientés transversalement à la bande transporteuse, parallèles entre eux. Ces câblés sont généralement en métal et ont un diamètre compris entre 2 et 8 mm. Ils peuvent toutefois être en textile et dans ce cas à un ou plusieurs plis. La nappe 12 est de préférence placée à mi-épaisseur de la bande, de façon à être dans le plan de la fibre neutre de la bande en flexion transversale. Ainsi, elle ne subit pas d'effort d'extension ou de compression notable lorsque la bande est pliée suivant une ligne longitudinale et ne s'oppose que par la raideur de ces câblés au pliage de la bande pour constituer un tube à section polygonale.

Les bandes étroites 14, au nombre de trois dans le mode de réalisation montré en figures 1, 2 et 3, sont destinées à raidir transversalement des zones longitudinales de la bande transporteuse de façon à interdire à la bande transporteuse de prendre une section arrondie dans l'ossature d'un convoyeur. Les bandes étroites sont placées à l'opposé de la nappe 10 par rapport à la nappe 12. Chacune est constituée par des éléments transversaux raides, généralement métalliques. Ces éléments peuvent être des tiges ou des lames. Si ce sont des lames, ces dernières ont un développement longitudinal suffisamment réduit pour ne pas gêner l'enroulement de la bande transporteuse sur un rouleau de renvoi. Si ce sont des tiges, ils peuvent être constitués par des tronçons de câble métallique ayant souvent un diamètre compris entre 1 et 1,5 mm.

Entre les bandes étroites 14 subsistent des intervalles 16 dans lesquels la bande présente une faible résistance à la flexion suivant une ligne longitudinale. Dans la pratique, ces intervalles auront une largeur au moins égale à trois fois l'épaisseur totale de la bande et inférieure à dix fois cette épaisseur. En général, la largeur de ces intervalles sera comprise entre trois et cinq fois l'épaisseur de la bande.

De plus, les bandes étroites 14 s'arrêtent à distance des bords de la bande transporteuse, de façon à laisser subsister des zones latérales 18 non renforcées en flexion. Ces zones latérales 18 correspondront en règle générale aux portions de la bande transporteuse qui, lorsque la bande transporteuse est dans la zone où elle transporte des matériaux, ne supportent pas le poids ou la poussée latérale de ces matériaux.

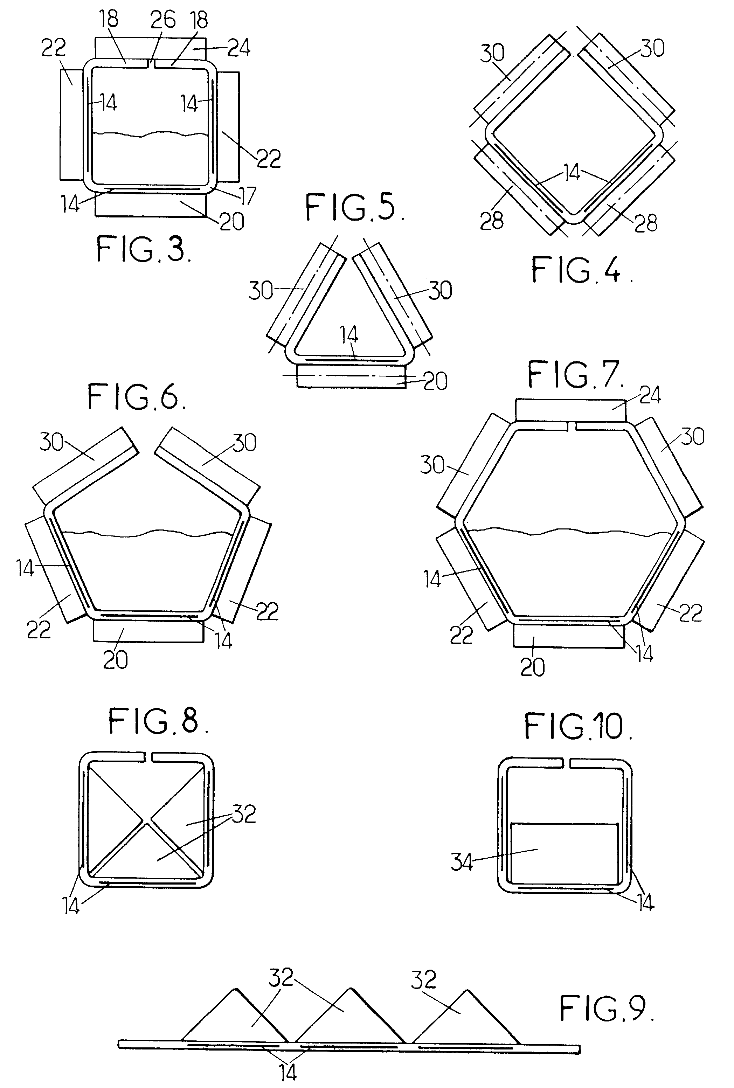

La figure 3 montre schématiquement une disposition avantageuse des bandes étroites 14 dans un convoyeur ayant, dans une zone de transport de matériaux, quatre rangées de rouleaux. Une rangée 20 supporte la partie centrale de la bande transporteuse. Les rouleaux de cette rangée 20 ont une longueur axiale légèrement supérieure à la largeur de la bande étroite médiane 14. Les rangées de rouleaux 22, à axe vertical, ont une longueur légèrement supérieure à celle des bandes étroites latérales 14. Ils imposent aux zones de la bande transporteuse qui contiennent ces bandes latérales une position verticale. Enfin, les rouleaux d'une rangée supérieure 24 referment la bande transporteuse sur elle-même en exerçant une pression sur les zones latérales 18. On voit que les portions de la bande transporteuse qui doivent résister au poids et à la pression latérale du matériau transporté sont renforcées par des bandes étroites 14. Ces bandes étroites coopèrent avec la nappe 12 et maintiennent les zones correspondantes de la bande transporteuse à l'état plat et empêchent la section droite de se déformer vers une forme arrondie, qui s'opposerait insuffisamment à une torsion de la bande laissant la brèche 26 se déplacer latéralement. On arrive ainsi à constituer un convoyeur tubulaire à section polygonale stable, contrairement aux convoyeurs à section circulaire.

Dans la variante de réalisation montrée en figure 4, la bande transporteuse est supportée par deux rangées de rouleaux 28 orientés à 45° de la verticale pour former un V. La bande transporteuse est refermée sur elle-même par deux rangées de rouleaux 30, deux à deux parallèles aux rouleaux des rangées 28. Dans ce cas la bande transporteuse ne comporte que deux bandes étroites 14.

Dans la variante de réalisation montrée en figure 5, l'ossature du convoyeur comprend une seule rangée 20 de rouleaux de support d'axe horizontal. Elle comporte deux rangées 30 de rouleaux de fermeture, l'ensemble des rouleaux donnant à la bande une section triangulaire à fond horizontal plat. Une seule bande étroite 14 est prévue.

Dans le mode de réalisation de la figure 6, l'ossature du convoyeur comprend une rangée 20 de rouleaux à axe horizontal, deux rangées 30 de rouleaux de fermeture et deux rangées 22 de rouleaux latéraux qui doivent résister à la pression latérale du produit transporté. A la différence des rouleaux 22 de la figure 3, ceux de la figure 6 ont des axes qui convergent vers le bas. L'ossature donne ainsi à la bande transporteuse, dans la zone de transport de matériaux, une section pentagonale. La bande transporteuse comporte des bandes étroites 14 uniquement face aux rangées de rouleaux 20 et 22.

Dans le cas de la figure 7, l'ossature est destinée à donner à la bande transporteuse une section hexagonale régulière dans la zone de transport. L'ossature comporte encore une rangée de rouleaux support 20, une rangée supérieure de fermeture 24 remplissant le même rôle que dans le cas de la figure 3, deux rangées 22 obliques destinées à résister à une composante du poids et à la poussée latérale du matériau transporté et enfin deux rangées de rouleaux 30 ayant un rôle comparable aux rouleaux 30 de la figure 6. On peut noter que le risque de voir la bande prendre une section arrondie et tourner est d'autant plus important que la section de consigne se rapproche davantage de son cercle inscrit. Cela revient à dire que le risque est d'autant plus élevé que la section présente un nombre de faces plus important. Dans le cas de la figure 7, le risque est réduit par la présence de trois bandes étroites 14 face aux rangées de rouleaux 20 et 22. Le risque peut être encore réduit en prévoyant aussi des bandes étroites en face des rangées de rouleaux 30.

Dans certains cas, la bande est destinée à un convoyeur ayant des parties ascendantes, destinées à élever le matériau transporté. Dans ce cas, la bande transporteuse peut être complétée par des tasseaux, plaques ou palettes qui, une fois la bande transporteuse refermée sur elle-même par les rouleaux de l'ossature, constituent des cloisons ne laissant subsister que de faibles jeux.

Les figures 8 et 9 montrent une bande du genre illustré en figure 3, comportant à intervalles réguliers dans le sens longitudinal, des jeux de trois palettes 32 de forme triangulaire, placées chacune en face d'une des bandes étroites 14. Ces palettes ont une forme triangulaire telle que, lorsque la bande transporteuse est repliée, elles viennent dans des positions adjacentes et constituent des cloisons occupant la majeure partie de la section droite interne de la bande transporteuse (figure 8).

La figure 10 montre qu'une bande transporteuse du genre montré en figures 1 à 3 peut comporter des palettes 34 de forme rectangulaire, ancrées sur la bande transporteuse au droit de la bande étroite médiane 14 et réparties de façon régulière le long de la bande. La palette montrée en figure 10 est de forme rectangulaire de façon que ses bords soient proches des faces latérales de la section droite lorsque la bande transporteuse est repliée. La palette a une saillie sensiblement égale à la moitié de la hauteur de la section droite. Cette disposition n'est pas limitative et en particulier la palette 34 pourrait avoir une dimension telle qu'elle obture pratiquement la section droite lorsque la bande transporteuse est destinée à un élévateur dont le trajet comporte des parties sensiblement verticales.

## Revendications

1. Bande transporteuse souple de forme plate au repos, comprenant une armature interne de renfort noyée dans des couches de matériaux élastomère, ladite armature comprenant une première nappe (10) en câblés longitudinaux de résistance longitudinale de la bande en traction, une seconde nappe (12) en câbles transversaux de résistance transversale en traction et une couche de raidissement ayant une résistance à la compression transversale élevée, comparée à la résistance transversale en compression de la seconde nappe, caractérisée en ce que ladite couche de raidissement comprend plusieurs bandes étroites (14) placées dans le même plan au repos, mutuellement adjacentes et laissant subsister entre elles une zone de largeur suffisante pour autoriser le pliage de la bande transporteuse entre deux rangées de rouleaux d'un convoyeur.

2. Bande transporteuse selon la revendication 1, caractérisée en ce que les bandes étroites (14) sont situées à l'opposé de la nappe (10) en câblés longitudinaux par rapport à la nappe (12) en câblés transversaux.

3. Bande transporteuse selon la revendication 1 ou 2, caractérisée en ce que la nappe (12) en câblés transversaux est placée dans le plan de la fibre neutre de la bande transporteuse en flexion transversale.

4. Bande transporteuse selon la revendication 1, 2 ou 3, caractérisée en ce que la couche de raidissement comprend trois bandes étroites (14) s'arrêtant à une distance des bords de la bande transporteuse qui laisse subsister des zones latérales de longueur totale sensiblement égale à la largeur de la bande de raidissement médiane (figure 3).

5. Convoyeur comportant au moins trois rangées de rouleaux de supportage et de guidage, les rangées définissant des plans d'appui donnant à une bande transporteuse située entre eux une section sensiblement fermée, ladite bande ayant au moins une bande étroite centrale (14) de raidissement transversal, constituée d'éléments transversaux parallèles entre eux, ladite bande étroite ayant une largeur légèrement inférieure à celle d'une rangée de rouleaux du convoyeur sur laquelle elle repose lors du déplacement.

6. Convoyeur selon la revendication 5, dont la bande transporteuse comprend au moins autant de bandes étroites (14) que de rangées de rouleaux sur lesquels la bande transporteuse repose sur son trajet de transport, la bande transporteuse étant démunie de bandes étroites (14) face àn celles des rangées de rouleaux qui n'assurent qu'une fonction de fermeture de la section droite de la bande transporteuse.

7. Convoyeur selon la revendication 5 ou 6, caractérisé en ce que la bande transporteuse est supportée par deux rangées de rouleaux (28) orientés à 45° de la verticale pour former un V et refermée sur elle-même par deux rangées de rouleaux (30) deux à deux parallèles aux rouleaux des rangées (28), la bande transporteuse ne comportant que deux bandes étroites (14).

8. Convoyeur selon la revendication 5 ou 6, comprenant une ossature ayant une seule rangée (20) de rouleaux de support, d'axe horizontal et deux rangées (30) de rouleaux de fermeture, ladite bande transporteuse ayant une seule bande étroite (14).

9. Convoyeur selon la revendication 5 ou 6, caractérisé en ce que la bande transporteuse comporte des palettes (34) ancrées sur elle au droit d'au moins une bande étroite (14).
